(19) Europäisches Patentamt
European Patent Office
Office européen des brevets

(11) EP 3 104 970 B1

(12) **EUROPÄISCHE PATENTSCHRIFT**

(45) Veröffentlichungstag und Bekanntmachung des Hinweises auf die Patenterteilung:
**28.03.2018 Patentblatt 2018/13**

(21) Anmeldenummer: **15700953.1**

(22) Anmeldetag: **21.01.2015**

(51) Int Cl.:
***B01J 31/24*** $^{(2006.01)}$ ***B01J 31/40*** $^{(2006.01)}$
***B01J 20/10*** $^{(2006.01)}$

(86) Internationale Anmeldenummer:
**PCT/EP2015/000103**

(87) Internationale Veröffentlichungsnummer:
**WO 2015/120955 (20.08.2015 Gazette 2015/33)**

(54) **VERFAHREN ZUR REGENERIERUNG GEBRAUCHTER HYDROFORMYLIERUNGSKATALYSATOREN**

METHOD FOR REGENERATING SPENT HYDROFORMYLATION CATALYSTS

PROCÉDÉ POUR RÉGÉNÉRER DES CATALYSEURS D’HYDROFORMYLATION USAGÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.02.2014 DE 102014002103**

(43) Veröffentlichungstag der Anmeldung:
**21.12.2016 Patentblatt 2016/51**

(73) Patentinhaber: **OXEA GmbH**
**46147 Oberhausen (DE)**

(72) Erfinder:
- **OSWALD, Markus**
  **46119 Oberhausen (DE)**
- **FERNANDEZ DIAZ, Ruben**
  **46539 Dinslaken (DE)**
- **KADZIMIRSZ, Daniel**
  **46569 Hünxe (DE)**
- **KOCKRICK, Kristina**
  **40595 Düsseldorf (DE)**
- **STRUTZ, Heinz**
  **47445 Moers (DE)**

(56) Entgegenhaltungen:
**EP-A1- 0 544 091 US-A- 4 283 304**

- **TOM ENGEL ET AL: "Thermoreversible Reactions on Inorganic Nanoparticle Surfaces: Diels-Alder Reactions on Sterically Crowded Surfaces", CHEMISTRY OF MATERIALS, Bd. 25, Nr. 2, 22. Januar 2013 (2013-01-22), Seiten 149-157, XP55176847, ISSN: 0897-4756, DOI: 10.1021/cm303049k**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 104 970 B1

## Beschreibung

Die vorliegende Erfindung betrifft ein Verfahren zur Regenerierung gebrauchter Hydroformylierungskatalysatoren durch Behandlung mit modifizierten Absorbentien.

Es ist bekannt, durch Umsetzung von Olefinen mit Kohlenmonoxid und Wasserstoff Aldehyde und Alkohole herzustellen, die ein Kohlenstoffatom mehr als das Ausgangsolefin enthalten. Das Gemisch aus Kohlenmonoxid und Wasserstoff wird auch Synthesegas genannt und seine Umsetzung mit Olefinen bezeichnet man als Hydroformylierungsreaktion oder auch als Oxo-Reaktion. Üblicherweise werden Kohlenmonoxid und Wasserstoff im molaren Verhältnis oder mit leichtem molaren Wasserstoffüberschuss eingesetzt. Die Reaktion wird durch Hydridometallcarbonyle, vorzugsweise solcher Metalle der VIII. Gruppe des Periodensystems der Elemente katalysiert. Neben Kobalt, das als Katalysatormetall in großem Umfang technisch Anwendung findet, hat gerade Rhodium in den letzten Jahren an Bedeutung gewonnen. Im Gegensatz zu Kobalt gestattet Rhodium die Reaktion bei niedrigeren Drücken durchzuführen. Ferner bildet Rhodium als Katalysatorbestandteil aus geradkettigen, endständigen Olefinen vorzugsweise n-Aldehyde und nur in untergeordnetem Maße iso-Aldehyde. Schließlich ist auch die Hydrierung der Olefine zu gesättigten Kohlenwasserstoffen deutlich niedriger als bei der Anwendung von Kobalt-Katalysatoren.

Bei den in der Technik eingeführten Verfahren ist der Rhodium-Katalysator ein durch zusätzliche Liganden, insbesondere tertiäre organische Phosphine oder Phosphite modifiziertes Hydridorhodiumcarbonyl. Es werden Mono- oder Diphosphine oder Mono-oder Diphosphite auch als Gemische eingesetzt. Meist liegen die Liganden im Überschuss vor, so dass das Katalysatorsystem aus Komplexverbindungen und freiem Liganden besteht, wobei das Katalysatorsystem in dem organischen Reaktionsprodukt homogen gelöst ist. Man bezeichnet diese Art der Verfahrensführung auch als homogene Arbeitsweise. Der Einsatz der beschriebenen Rhodium-Katalysatoren ermöglicht es, die Hydroformylierungsreaktion bei Drücken unter 30 MPa durchzuführen. Die Abtrennung der Reaktionsprodukte und die Wiedergewinnung der im Reaktionsprodukt homogen gelösten Katalysatoren erfolgt im Allgemeinen durch Destillation, wobei man das Umsetzungsprodukt aus dem Reaktionsgemisch abdestilliert. In der Praxis kann dieser Weg wegen der thermischen Empfindlichkeit der gebildeten Aldehyde und Alkohole nur bei der Hydroformylierung niedriger Olefine, d.h. Olefine mit bis zu etwa 8 Kohlenstoffatomen im Molekül, beschritten werden. Außerdem hat sich gezeigt, dass die thermische Belastung des Destillationsgutes auch zu erheblichen Katalysatorverlusten durch Zersetzung der Rhodium-Komplexverbindungen führt.

Neben thermischen Trennverfahren wird im Stand der Technik auch die Verwendung von Membranen beschrieben. DE 10 2005 046 250 A1 behandelt die Abtrennung von gelösten Hydroformylierungskatalysatoren aus einem nicht wässrigen Hydroformylierungsgemisch mit einer Membran, die für das Hydroformylierungsprodukt besser durchlässig ist und wobei das katalysatorhaltige Retentat in die Hydroformylierungszone zurückgeführt wird. Der Membrantrennschritt wird bei einem Kohlenmonoxid-Partialdruck von über 200 kPa durchgeführt.

Auch die Anwendung von wasserlöslichen Katalysatorlösungen, wie in DE 2627354 A1 beschrieben, vermeidet die thermische Belastung bei Abtrennung des Hydroformylierungskatalysators von den gewünschten Aldehyden. Die Löslichkeit der Rhodium-Komplexverbindungen wird hierbei durch Verwendung sulfonierter Triarylphosphine mit unterschiedlichem Sulfonierungsgrad als Komplexbestandteil erreicht. Die Abtrennung des Katalysators vom Reaktionsprodukt nach Beendigung der Umsetzung erfolgt bei dieser Verfahrensvariante einfach durch Phasentrennung der wässrigen von der organischen Phase, d.h. ohne Destillation und damit ohne zusätzlichen thermischen Verfahrensschritt. Ein weiteres Merkmal dieser Arbeitsweise ist, dass mit hoher Selektivität aus geradkettigen endständigen Olefinen n-Aldehyde und nur in ganz untergeordnetem Maße iso-Verbindungen gebildet werden. Als Komplexbestandteile wasserlöslicher Rhodium-Komplexverbindungen werden vorzugsweise sulfonierte, daneben auch, wie aus DE 31 35 127 A1 bekannt ist, carboxylierte Triarylphosphine eingesetzt. Neben den einzähningen Phosphinliganden haben auch mehrzähnige, wasserlösliche Phosphinliganden, wie z.B. sulfoniertes oder carboxyliertes 2.2'-Bis(diphenyl-phosphinomethyl)-1,1'-binaphthyl in den letzten Jahren Anwendung gefunden. Beschrieben werden diese z. B. in EP 0 571 819 A1. Aufgrund des gemeinsamen Vorliegens der wässrigen Katalysatorlösung und der organischen Reaktionslösung bezeichnet man diese Verfahrensführung auch als heterogenes Verfahren oder Zweiphasenverfahren.

Unabhängig davon, ob man mit im organischen Reaktionsgemisch homogen gelösten Hydroformylierungskatalysatoren oder mit in einer separaten wässrigen Phase gelösten Hydroformylierungskatalysatoren arbeitet, nimmt bei der kontinuierlicher Verfahrensführung oder bei wiederholtem Einsatz derselben Katalysatorlösug im Laufe der Zeit die Aktivität des Katalysatorsystems ab. Diesem Aktivitätsverlust wird häufig durch Erhöhung der Reaktionstemperatur gegengesteuert. Eine Erhöhung der Reaktionstemperatur ist jedoch nur bis zu einem bestimmten Grade möglich, um nicht den Hydroformylierungskatalysator und den Organophosphorliganden irreversibel zu schädigen. Auch im Hinblick auf Sicherheitsaspekte verbietet sich eine zu starke Erhöhung der Reaktionstemperatur.

Als eine der Ursachen für den Aktivitätsverlust des Hydroformylierungskatalysators nennt der Stand der Technik die Bildung von Alkylarylphosphinen im Laufe der Umsetzung der Olefine mit Kohlenmonoxid und Wasserstoff aus den Triarylphosphinen durch Austausch von Arylresten gegen Alkylgruppen, wobei die Alkylgruppen sich von dem Olefin ableiten, das hydroformyliert wird. So entsteht bei der Reaktion von Propylen in Gegenwart von Triphenylphosphin n-Propyl-diphenylphosphin. Die gemischten, aliphatischen-aromatischen Phosphine ergeben mit Rhodium katalytisch inaktive Komplexverbindungen mit der Folge, dass Reaktionsgeschwindigkeit und Katalysatoraktivität deutlich abnehmen. Wird nach dem heterogenen Verfahren in Gegenwart von sulfoniertem oder carboxyliertem Triphenylphosphin gearbeitet, bilden sich entsprechend disulfoniertes oder dicarboxyliertes n-Propyldiphenylphoshin, das ebenfalls mit Rhodium zu katalytisch inaktiven Komplexverbindungen reagiert.

Bei der kontinuierlichen Verfahrensführung reichern sich diese schädlichen Alkylarylphoshine im Hydroformylierungsprozess an und mindern die Aktivität des Hydroformylierungskatalysators und seine Selektivität zu den geradkettigen Aldehyden über die Laufzeit.

Der Stand der Technik schlägt daher verschiedene Verfahren zur Entfernung dieser schädlichen Alkylarylphosphine aus den Prozessströmen vor, die bei der Aufarbeitung des Hydroformylierungsgemisches anfallen und in denen der gebrauchte Rhodiumkomplexkatalysator zusammen mit überschüssigen Organophosphorliganden und schädlichen Alkylarylphosphinen vorliegt und die wieder in die Hydroformylierungszone zurückgeführt werden.

Nach der gemäß US 4,283,304 vorgeschlagenen Arbeitsweise, werden die bei dem Homogenverfahren nach destillativer Aldehydabtrennung anfallenden rhodiumhaltigen Rückstände mit einer wässrigen Lösung extrahiert, die eine $\alpha,\beta$-ungesättigte Verbindung, beispielsweise Maleinsäure oder Maleinsäureanhydrid enthält, wobei sich bevorzugt das Reaktionsprodukt aus dem Alkylarylphosphin und der $\alpha,\beta$-ungesättigten Verbindung in der wässrigen Phase anreichert. In der abgetrennten katalysatorhaltigen organischen Phase sind die schädlichen Alkylarylphosphine abgereichert und sie zeigt nach Rückführung in den Hydroformylierungsprozess eine erhöhte katalytische Aktivität.

Aus EP 0 544 091 A1 ist ein Verfahren zur Entfernung sulfonierter oder carboxylierter Alkylarylphosphine bekannt, bei dem der gebrauchten, wässrigen Katalysatorlösung, die man auch als Altkontakt oder Altkontaktlösung bezeichnet, Maleinsäure, Maleinsäureanhydrid, Fumarsäure oder ungesättigte cyclische Verbindungen, die sich von Maleinsäureanhydrid ableiten lassen, zugesetzt werden. Auch hier wird angenommen, dass sich aus dem sulfonierten oder carboxylierten Alkylarylphosphin und Maleinsäureanhydrid ein Umsetzungsprodukt bildet, das die Schadsubstanz bindet, und durch Maleinsäureanhydridzugabe lässt sich die Aktivität der Kataysatorlösung erheblich steigern. Bei dieser Verfahrensführung verbleibt das Reaktionsprodukt aus dem Alkylarylphosphin und Maleinsäureanhydrid aufgrund seiner Wasserlöslichkeit in der Altkatalysatorlösung, die in die Hydroformylierungszone zurückgeführt wird.

EP 0 544 091 offenbart jedoch nicht, ob der vorteilhafte Effekt der Aktivitätssteigerung über einen längeren Zeitraum anhält oder dann nachlässt. Auch müssen nach dem bekannten Verfahren der wässrigen Altkatalysatorlösung lösliche Fremdstoffe zugesetzt werden, die sich dann in der wässrigen Altkatalyatorlösung anreichern und bei der kontinuierlichen Verfahrensführung die Salzfracht erhöhen. Die Arbeitsweise nach US 4,283,304 benötigt einen zusätzlichen Extraktionsschritt mit einer wässrigen Lösung, der die Verfahrensführung verkompliziert. Ebenfalls werden hierbei geringe Wassermengen in den homogen durchgeführten Hydroformylierungsprozess eingetragen. Es bestand daher die Aufgabe, ein Verfahren zur Regenerierung gebrauchter Hydroformylierungskatalysatoren bereitzustellen, das die zuvor geschilderten Nachteile überwindet.

ENGEL, T., Chem. Mater. 2013, 25, 149-157 beschreibt die Modifizierung von Siliziumdioxid mit Maleinimidgruppen und untersucht ihre Reaktivität in Diels-Alder-Reaktionen. Zunächst wird 3- Aminopropyltriethoxysilan durch Reaktion mit Maleinsäureanhydrid in die Imidzwischenstufe überführt, die anschließend auf Siliziumdioxid verankert wird.

Erfindungsgemäß wird diese Aufgabe gelöst durch ein Verfahren zur Regenerierung gebrauchter Hydroformylierungskatalysatoren, dadurch gekennzeichnet, dass man

a) ein Adsorbens, an dem Aminogruppen der Formel $-R^1-NH_2$, in der $R^1$ einen zweiwertigen Kohlenwasserstoffrest bedeutet, gebunden sind, mit der olefinisch ungesättigen Verbindung der allgemeinen Formel (I):

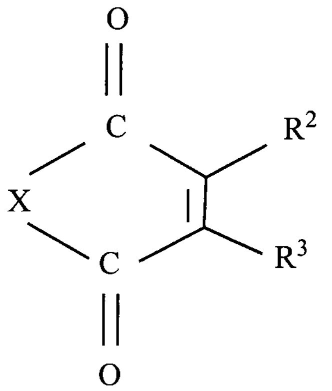

(1)

in der $R^2$ und $R^3$ jeweils unabhängig voneinander Wasserstoff oder einen Alkylrest mit 1 bis 4 Kohlenstoffatomen

oder einen Arylrest mit 6 bis 14 Kohlenstoffatomen bedeuten, und in der X für O, S, N-$R^4$ steht, in der $R^4$ einen Alkylrest, einen Arylrest, einen Alkylarylrest oder Arylalkylrest bedeutet, reagieren lässt und dabei die gebildete Verbindung $H_2X$ entfernt;

b) eine Lösung des gebrauchten Hydroformylierungskatalysators mit dem gemäß Schritt a) erhaltenen Adsorbens in Kontakt bringt; und

c) die Lösung des gemäß Schritt b)in Kontakt gebrachten gebrauchten Hydroformylierungskatalysators von dem gemäß Schritt a) erhaltenen Adsorbens abtrennt;

mit der Maßgabe,
dass eine organische Lösung des gebrauchten Hydroformylierungskatalysators enthaltend Triphenylphosphin oder 2,2'-Bis(diphenyl-phosphinomethyl)-1,1'-binaphthyl mit dem Adsorbens in Kontakt gebracht wird, oder
dass eine wässrige Lösung des gebrauchten Hydroformylierungskatalysators enthaltend Arylphosphine der allgemeinen Formel (II):

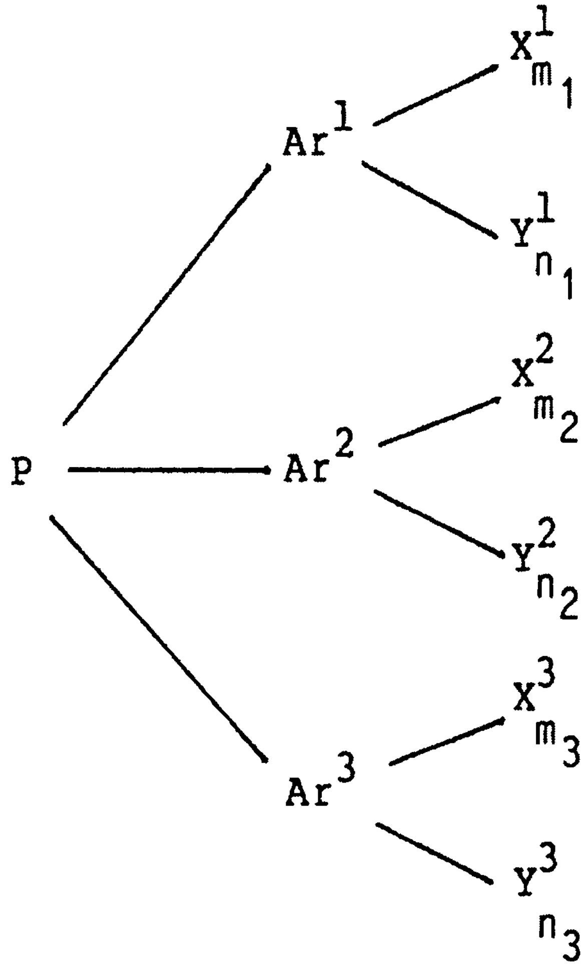

wobei $Ar^1$, $Ar^2$, $Ar^3$ jeweils eine Phenyl- oder Naphthylgruppe, $Y^1$, $Y^2$, $Y^3$ jeweils eine geradkettige oder verzweigte Alkylgruppe mit 1 bis 8 C-Atomen, eine geradkettige oder verzweigte Alkoxygruppe mit 1 bis 8 C-Atomen, ein Halogenatom, eine OH-, CN-, $NO_2$- oder $NR^5R^6$-Gruppe, in der $R^5$ und $R^6$ jeweils für eine geradkettige oder verzweigte Alkylgruppe mit 1 bis 8 C-Atomen stehen, bedeuten, $X^1$, $X^2$, $X^3$ für einen Carboxylat- ($COO^-$-) und/oder einen Sulfonat-(-$SO_3^-$)-Rest stehen, $m_1$, $m_2$, $m_3$ gleiche oder verschiedene Zahlen von 0 bis 3 sind, wobei mindestens eine Zahl $m_1$, $m_2$, $m_3$ gleich oder größer als 1 ist, und $n_1$, $n_2$, $n_3$ gleiche oder verschiedene ganze Zahlen von 0 bis 5 sind, mit dem Adsorbens in Kontakt gebracht wird.

Überraschenderweise führt das erfindungsgemäße Verfahren zu einer deutlichen Wiederbelebung selbst solcher Hydroformylierungskatalysatoren, die über längere Zeiträume verwendet wurden. Aktivität, Produktivität und Selektivität erlangen durch die erfindungsgemäße Maßnahme vielfach ihre ursprünglichen Werte wieder. Da das ursprüngliche Produktivitäts- und Aktivitätsniveau ohne die Anhebung der Reaktionstemperatur wieder erreicht werden kann, erniedrigt sich ebenfalls vorteilhafterweise die Zersetzungsrate des Hydroformylierungskatalysators und der Organophosphorverbindungen.

Einsatzprodukt für das erfindungsgemäße Regenerationsverfahren sind Lösungen gebrauchter Hydroformylierungskatalysatoren. Diese eingesetzte Lösung enthält den katalytisch aktiven Hydroformylierungskatalysator, in dem ein Übergangsmetall der Gruppe VIII des Periodensystems der Elemente mit einer Organophosphorverbindung, die mindestens ein Arylphosphin umfasst, als Ligand komplexgebunden vorliegt, überschüssige Organophosphorverbindung, als Abbauprodukte der Organophosphorverbindungen Alkyarylphosphine und höherkernige Clusterverbindungen der Übergangsmetalle.

Die Lösung des gebrauchten Hydroformylierungskatalysators enthält als katalytisch aktives Übergangsmetall der Gruppe VIII des Periodensystems der Elemente Kobalt, Rhodium, Iridium, Nickel, Palladium, Platin, Eisen oder Ruthenium und insbesondere Rhodium oder Kobalt. Als Organophosphorverbindung ist mindestens als Arylphosphin das Monophosphin Triphenylphosphin oder das Diphosphin 2.2'-Bis(diphenyl-phosphinomethyl)-1,1'-binaphthyl zugegen. Zu den Arylphosphinen zählen Mono-, Di- oder Polyphosphine enthaltend Arylgruppen. Daneben kann die gebrauchte Katalysatorlösung auch noch Phosphite oder Diphosphite enthalten. Die Alkylgruppe in den schädlichen Alkylarylphosphinen leitet sich von dem in der Hydroformylierungsreaktion eingesetzten Olefin ab und bei der Hydroformylierung von Propylen in Gegenwart von Triphenylphosphin wird n-Propyl-diphenylphosphin als Schadsubstanz gebildet.

Wird die Hydroformylierungsreaktion nach dem homogenen Verfahren durchgeführt, fällt nach der Abtrennung der gewünschten Aldehydprodukte von dem Hydroformylierungskatalysator eine organische Lösung des gebrauchten Hydroformylierungskatalysators an, die neben zuvor genannten Bestandteilen wie den schädlichen Alkylarylphosphinen auch noch höhere Kondensationsprodukte der Aldehyde und gegebenenfalls noch ein organisches Lösungsmittel, wie aromatische Kohlenwasserstoffe, z. B. Toluol oder die isomeren Xylole, enthält. Die Abtrennung der gewünschten Aldehyde von dem gebrauchten Hydroformylierungskatalysator kann beispielsweise thermisch erfolgen, wobei die organische Lösung des gebrauchten Hydroformylierungskatalysators als Destillationsrückstand anfällt. Wird zur Abtrennung des gebrauchten Hydroformylierungskatalysators die Membrantechnik verwendet, erhält man die gebrauchte Lösung des Hydroformylierungskatalysators als Retentat.

Die Hydroformylierungsreaktion mit dem homogen gelösten Hydroformylierungskatalysator wird im Allgemeinen bei Temperaturen von 50 bis 160°C und Drücken von 0,4 bis 40 MPa durchgeführt. Die Übergangsmetallkonzentration, insbesondere die Rhodiumkonzentration, beträgt üblicherweise von 1 bis 1200 ppm, bezogen auf die Reaktionslösung, und üblicher Weise werden pro mol Übergangsmetall von 1 bis 200 mol Organophosphorverbindung eingesetzt. Als Organophosphorverbindung verwendet man Triphenylphosphin oder Gemische aus Triphenylphosphin und Diarylphosphinen oder Triphenylphosphin und Phosphiten und/oder Diphosphiten. Das Reaktionsgemisch wird in flüssiger Form aus der Reaktionszone abgeführt und in einer nachgeschalteten Trenneinrichtung, beispielsweise in einer Destillationseinrichtung oder in einer Membrantrenneinheit, in das gewünschte Aldehydgemisch und die Lösung des gebrauchten Hydroformylierungskatalysators aufgetrennt, die bei nachlassender Aktivität des Hydroformylierungskatalysators nach dem erfindungsgemäßen Verfahren behandelt wird.

Ebenfalls kann das gewünschte Aldehydgemisch gasförmig, beispielsweise durch einen Destilationsprozess oder durch Strippen mit Olefin und/oder Synthesegas aus der Hydroformylierungszone abgeführt werden. Bei dieser Verfahrensausgestaltung verbleibt der homogen gelöste Hydroformylierungskatalysator in der Hydroformylierungszone und wird bei nachlassender Aktivität der Hydroformylierungszone entnommen, beispielsweise in Form eines Kreislaufstromes oder By-passes, und gemäß der erfindungsgemäßen Arbeitsweise behandelt.

Wird die Hydroformylierungsreaktion nach dem Zweiphasenverfahren mit einer wässrigen Katalysatorlösung durchgeführt, die sulfonierte oder carboxylierte Organophosphorverbindungen enthält, wird das der Hydroformylierungszone entnommene flüssige Zweiphasengemisch in einem Trenngefäß in die organische aldehydhaltige und in die wässrige Katalysatorlösung getrennt. Die organische aldehydhaltige Phase wird weiter aufgereinigt während die wässrige Katalysatorphase in die Reaktionszone zurückgeführt wird. Da bei dieser Verfahrensvariante mit wasserlöslichen sulfonierten oder carboxylierten Oganophosphorverbindungen gearbeitet wird, werden dementsprechend auch wasserlösliche sulfonierte oder carboxylierte Alkylarylphosphine gebildet, die mit dem Übergangsmetall einen katalytisch inaktiven Komplex bilden. Fällt die Aktivität der wässrigen Lösung des gebrauchten Hydroformylierungskatalysators unter ein vertretbares Niveau, wird sie gemäß dem erfindungsgemäßen Verfahren behandelt.

Die Hydroformylierungsreaktion mit der wässrigen Katalysatorlösung wird im Allgemeinen bei Temperaturen von 50 bis 150°C und Drücken von 2 bis 20 MPa durchgeführt. Die Übergangsmetallkonzentration, insbesondere die Rhodiumkonzentration, beträgt üblicherweise von 10 bis 500 ppm, bezogen auf eingesetztes Olefin, und üblicher Weise werden pro mol Übergangsmetall von 3 bis 250 mol sulfonierte oder carboxylierte Organophosphorverbindung eingesetzt.

Bei dem Zweiphasenverfahren werden Arylphosphine der allgemeinen Formel (II) eingesetzt:

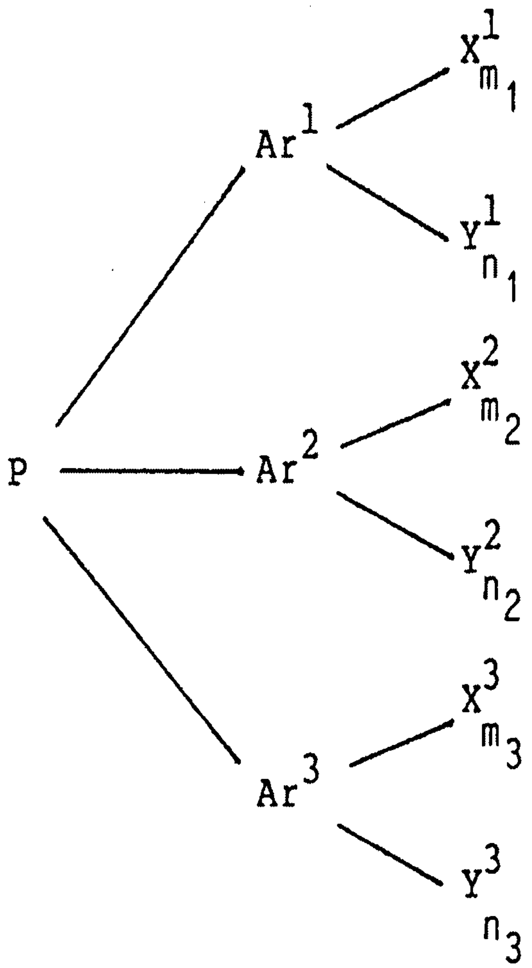

wobei $Ar^1$, $Ar^2$, $Ar^3$ jeweils eine Phenyl- oder Naphthylgruppe, $Y^1$, $Y^2$, $Y^3$ jeweils eine geradkettige oder verzweigte Alkylgruppe mit 1 bis 8 C-Atomen, eine geradkettige oder verzweigte Alkoxygruppe mit 1 bis 8 C-Atomen, ein Halogenatom, eine OH-, CN-, $NO_2$- oder $NR^5N^6$-Gruppe, in der $R^5$ und $R^6$ jeweils für eine geradkettige oder verzweigte Alkylgruppe mit 1 bis 8 C-Atomen stehen, bedeuten, $X^1$, $X^2$, $X^3$ für einen Carboxylat- ($COO^-$-) und/oder einen Sulfonat-($-SO_3^-$) Rest stehen, $m_1$, $m_2$, $m_3$ gleiche oder verschiedene Zahlen von 0 bis 3 sind, wobei mindestens eine Zahl $m_1$, $m_2$, $m_3$ gleich oder größer als 1 ist, und $n_1$, $n_2$, $n_3$ gleiche oder verschiedene ganze Zahlen von 0

bis 5 sind. Während der Hydroformylierung von Propylen wird aus dem sulfonierten oder carboxylierten Triphenylphosphin disulfoniertes oder dicarboxyliertes n-Propyl-diphenylphosphin gebildet.

Das für die erfindungsgemäße Behandlung der Lösung des gebrauchten Hydroformylierungskatalysators verwendete Adsorbens leitet sich beispielsweise von einem Siliziumdioxid ab, an dem eine Aminogruppe der Formel $-R^1-NH_2$ gebunden ist. Dabei bedeutet $R^1$ einen zweiwertigen Kohlenwasserstoffrest, dessen freie Valenzen durch die Bindung an das Adsorbens und an Stickstoff abgesättigt sind. $R^1$ bedeutet vorzugsweise einen Alkylen- oder Arylenrest, insbesondere einen Alkylenrest mit 1 bis 5 Kohlenstoffatomen oder einen Arylenrest mit 6 oder 10 Kohlenstoffatomen. Vorzugsweise bedeutet $R^1$ Ethylen, Propylen oder Butylen, insbesondere 1,3-Propylen oder 1,4-Butylen. Ein mit der Aminopropylgruppe modifiziertes Siliziumdioxid steht unter der Type Quadrasil AP von Johnson Matthey kommerziell zur Verfügung.

Das mit den stickstoffhaltigen Gruppen modifizierte Absorbens wird zunächst mit einer olefinisch ungesättigten Verbindung der allgemeinen Formel (I)

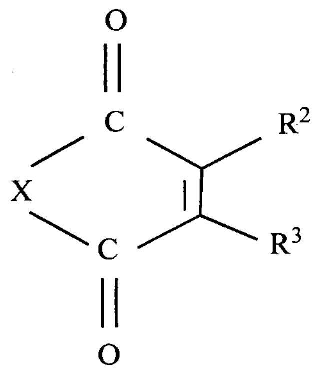

(1)

in der $R^2$ und $R^3$ jeweils unabhängig voneinander Wasserstoff oder einen Alkylrest mit 1 bis 4 Kohlenstoffatomen oder einen Arylrest mit 6 bis 14 Kohlenstoffatomen bedeuten, und in der X für O, S, N-$R^4$ steht, in der $R^4$ einen Alkylrest, einen Arylrest, einen Alkylarylrest oder Arylalkylrest, vorzugsweise einen Alkylrest mit 1 bis 5 Kohlenstoffatomen, bedeutet, umgesetzt wobei es zur Freisetzung des Kondensationsproduktes $H_2X$ kommt. Vorzugsweise eignet sich Maleinsäureanhydrid oder Maleimid als olefinisch ungesättigte Verbindung der allgemeinen Formel (I) für die weitere Modifizierung des Adsorbens.

In einer bevorzugten Ausgestaltung wird Maleinsäureanhydrid zweckmäßigerweise bei erhöhter Temperatur in Gegenwart eines organischen Lösungsmittels, das mit Wasser als Kondensationsprodukt ein Azeoztrop bildet, mit dem aminmodifizierten Adsorbens umgesetzt. Durch Abdestillieren des Wasser/Lösungsmittels-Azeotrops wird das gebildete Reaktionswasser entfernt. Als organisches Lösungsmittel und Azeotropbildner eignet sich beispielsweise Toluol, Cyclohexan oder Hexen-1. Nachdem der Wasseranfall beendet ist, trennt man das behandelte Adsorbens ab und trocknet es.

Ohne zu sehr auf mechanistische Überlegungen eingehen zu wollen, kann angenommen werden, dass der Aminstickstoff des modifizierten Adsorbens an einen der Carbonylkohlenstoffe der ungesättigten Verbindung der Formel (1) nukleophil addiert und die gebildete Zwischenstufe zum aktiven Imid unter Abspaltung von $H_2X$ kondensiert. Im Falles eines mit Aminopropylgruppen modifizierten Siliziumdioxids kann folgender Reaktionsweg angenommen werden:

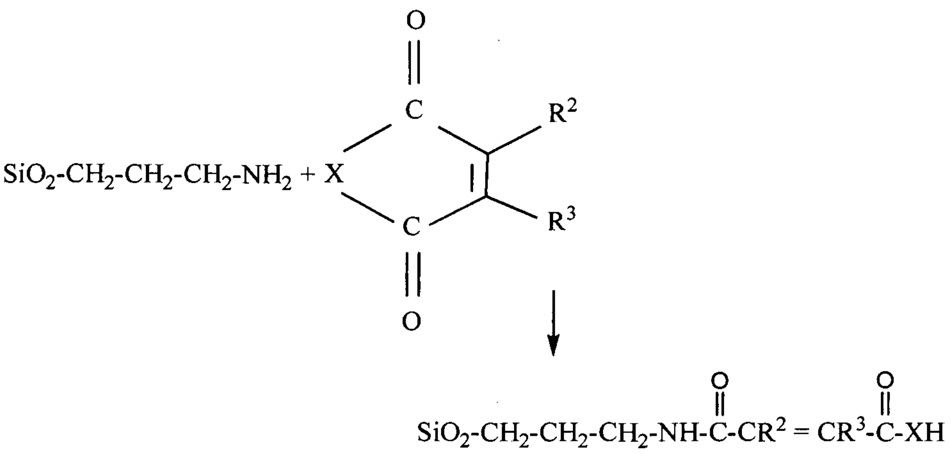

(a)

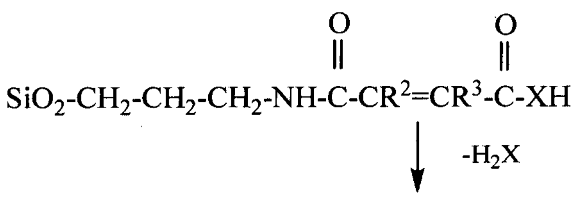


(b)

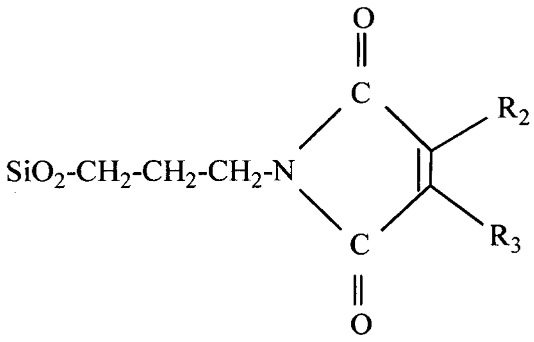

Das auf diese Weise immobilisierte Imid kann anschließend als Michaelakzeptor für basische Phosphine fungieren:

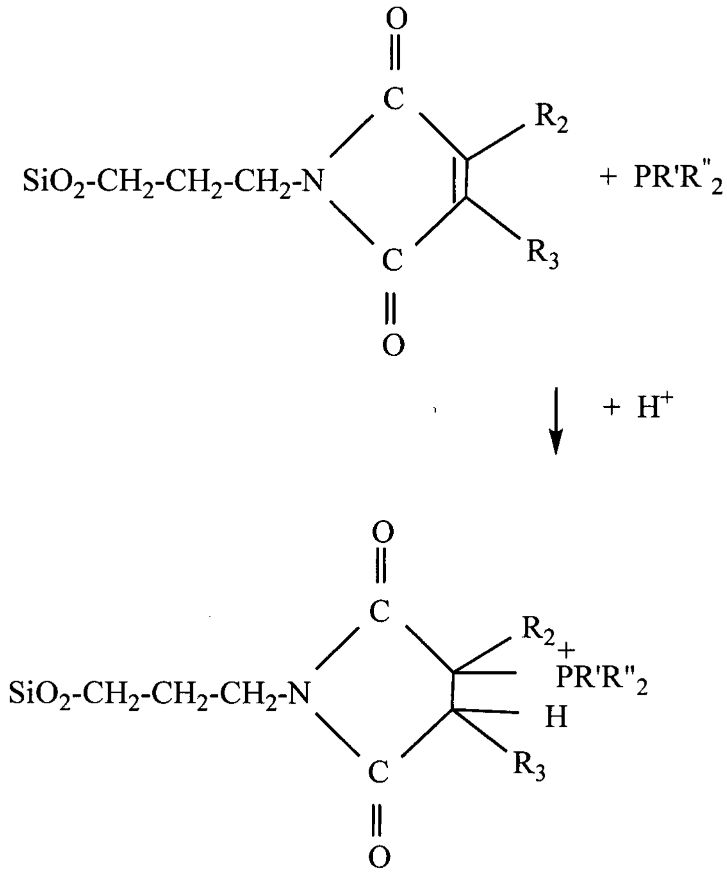


(c)

mit R' gleich Alkyl und R" gleich Aryl.

Durch die gezielte Bindung des Alkylarylphosphins an das modifizierte Adsorbens kann diese Schadsubstanz entfernt werden.

Das nach der beschriebenen Arbeitsweise modifizierte Adsorbens eignet sich zur Behandlung von organischen als auch wässrigen Lösungen, die den gebrauchten Hydroformylierungskatalysator zusammen mit den schädlichen Alkylarylphosphinen enthalten, und es kann daher sowohl im homogen durchgeführten Hydroformylierungsprozess als auch beim Zweiphasen-Verfahren angewandt werden.

Die Behandlung der Lösung des gebrauchten Hydroformylierungskatalysators mit dem modifizierten Absorbens kann in Suspension in einem Rührkessel oder in einer Rührkesselkaskade durchgeführt werden, wobei eine ausreichende Verteilung des Feststoffs in der Reaktionslösung sicherzustellen ist. Ebenfalls kann die Behandlung in einem Rohrreaktor an einem fest angeordneten Reinigungsbett nach der Rieselfahrweise oder Sumpffahrweise durchgeführt werden. Diese Variante in der Reaktionsführung erlaubt auf einfache Weise, aus der abgeführten behandelten Lösung des gebrauchten Hydroformylierungskatalysators einen Teilstrom als Kreislaufstrom über das Reinigungsbett zurückzuführen. Ansonsten wird bei Verwendung von in der Lösung suspendierten modifizierten Adsorbentien nach beendeter Behandlung das

modifizierte Adsorbens abfiltriert. Die Behandlung der Lösung des gebrauchten Hydroformylierungskatalysators kann sowohl absatzweise als auch kontinuierlich durchgeführt werden, wobei die kontinuierliche Verfahrensführung die bevorzugte ist.

Bei der diskontinuierlichen Verfahrensführung werden je 100 Gew.-Teile zu behandelnder Lösung 0,2 bis 5, vorzugsweise 0,5 bis 1 Teile modifiziertes Adsorbens eingesetzt. Bei der kontinuierlichen Verfahrensführung hat sich eine Belastung des modifizierten Adsorbens V/Vh, ausgedrückt in Durchsatzvolumen pro Adsorbensvolumen und Zeit von 50 bis 500 $h^{-1}$, vorzugsweise von 100 bis 250 $h^{-1}$ als zweckmäßig erwiesen.

Die Behandlung mit dem modifizierten Adsorbens erfolgt bei einer Temperatur von 20 bis 145°C, vorzugsweise von 60 bis 100°C bei Normaldruck oder Eigendruck. Eine Verfahrensführung unter Anlegen eines Fremdgasdrucks, vorzugsweise unter Anlegen eines Kohlenmonoxiddrucks ist ebenfalls möglich. Beispielsweise beträgt der Fremdgasdruck bis zu 1 MPa (absolut).

Nach der Abtrennung von dem modifizierten Adsorbens wird die regenerierte gebrauchte Katalysatorlösung wieder in die Hydroformylierungszone zurückgeführt. Durch die erfindungsgemäße Abtrennung der schädlichen Alkylarylphosphine aus der organischen oder wässrigen Lösung des gebrauchten Hydroformylierungskatalysators mittels eines festen, modifizierten Adsorbens kann auf einfache Weise die Produktivität der Katalysatorlösung wieder erhöht werden. Das erfindungsgemäße Verfahren wird durch die folgenden Beispiele erläutert.

Beispiele:

1. <u>Herstellung des modifizierten Adsorbens:</u>

In einem trockenen 500 ml Zweihalskolben mit Wasserabscheider wurden unter Schutzgasatmosphäre 100 g Quadrasil AP (Aminopropyl), kommerziell bei Johnson Matthey verfügbar, mit 300 ml Toluol versetzt. Es wurden 21 g Maleinsäureanhydrid hinzugegeben und solange unter Rückfluss erhitzt, bis der Wasseraustrag beendet war. Nach dem Abkühlen wurde das überstehende Toluol über eine Nutsche abgesaugt. Der Feststoff wurde mit Toluol und Wasser gewaschen und im Anschluss im Vakuum getrocknet.

Zur Überprüfung des Beladungsgrads des modifizierten Adsorbens wurde eine Probe mit einer verdünnten wässrigen rhodiumhaltigen Lösung über drei Stunden gerührt. Anhand der Abnahme des Rhodiumgehaltes in der überstehenden Lösung wurde der Belegungsgrad rechnerisch ermittelt. Für die nachfolgenden Regenerationsversuche der Lösung des gebrauchten Hydroformylierungskatalysators wurde ein modifiziertes Adsorbens verwendet, das einen Beladungsgrad des Amins von >98,5% aufwies.

2. <u>Steigerung der Produktivität einer wässrigen Lösung eines in der Propylenhydroformylierung gebrauchten Katalysators</u>

Eine wässrige Katalysatorlösung mit einem gealterten Rhodium/trisulfo-niertem Triphenylphosphin-Katalysator (Rh/TPPTS) wurde für die kontinuierliche Hydroformylierung von Propylen eingesetzt. In der Altkontaktlösung betrug das molare Verhältnis von Phosphor zu Rhodium <90, der Gehalt an Phosphorsalzen lag bei 30 Gew.-%, bezogen auf die Altkontaktlösung, wovon 11 Gew.-% auf trisulfoniertes Triphenylphosphin (TPPTS) und 0,30 Gew.-% auf n-Propyl-disulfoniertes-diphenylphosphin (PDSPP) entfielen.

Die Reaktion wurde in einer Apparatur mit einem 1 Liter-Rührreaktor, Phasentrenner, Produktvorlage und Abgasregelung bei einem pH-Wert von 5,8, einer Reaktionstemperatur von 128 °C und einem Reaktionsdruck von 5,0 MPa durchgeführt.

In Figur 1 ist das Prinzipschema der verwendeten kontinuierlich betriebenen Versuchsanlage dargestellt.

In den Rührreaktor (1) wurden über die Leitung (2) Propylen, über die Leitung (3) Synthesegas und über die Leitung (4) wässrige Katalysatorlösung eingeleitet. Das über die Leitung (5) abgeführte Zweiphasengemisch aus der organischen Produktphase und der wässrigen Katalysatorlösung wurde in den Phasentrenner (6) geleitet, in dem sich die organische, n- und iso-Butyraldehyd enthaltende Phase von der wässrigen Katalysatorphase separierte. Dabei anfallendes Abgas, wie Restpropylen und Synthesegas, wurde über die Leitung (7) abgeführt. Die organische Produktphase wurde über Leitung (8) in die Produktvorlage (9) gegeben, in der gebildete gasförmige Stoffe über Leitung (10) und der organische Flüssigkeitsstrom über Leitung (11) abgeführt wurden. Die im Phasentrenner (6) anfallende wässrige Katalysatorlösung wurde über Leitung (4) in den Hydroformylierungsreaktor (1) zurückgeführt. Für die Versuche zur Regenerierung der wässrigen Katalysatorlösung wurde in den Katalysatorkreislauf (4) ein Rohrreaktor (12) mit dem festen, modifizierten Adsorbens eingebaut. Gegebenenfalls kann dem wässrigen Katalysatorkreislauf (4) frische Rhodiumverbindung und/oder frische Organophosphorverbindung zugesetzt werden (nicht in Figur 1 gezeigt).

Auf diese Weise wurden bei einem Einsatz von 125 g/h Propylen 70 g/h an Rohaldehyd (n und iso-Butyraldehyd) erhalten. Dies entspach der maximalen Produktivität der Apparatur mit dieser Kontakt-Lösung, wobei sich Produktivität und Aktivität der Kontaktlösung gemäß der Beziehung:

$$\text{Aktivität: } \frac{\text{mol (n+i) Aldehyd}}{\text{g-Atom Rhodium . min}}$$

$$\text{Produktivität: } \frac{\text{g (n+i) Aldehyd}}{\text{cm}^3 \text{ Katalysatorlösung . h}}$$

errechnen.

In das so eingefahrene Reaktionssystem wurde ein Rohrreaktor, der 5 g gemäß Versuchsvorschrift 1) modifiziertes Quadrasil AP enthielt, in den Katalysatorkreislauf eingekoppelt, woraufhin die Konzentration an PDSPP in der Altkatalysatorlösung innerhalb von 48 h auf 0,07 Gew.-% sank. Gleichzeitig stieg die Produktivität, so dass in den folgenden 500 h Betriebsstunden bei gleichem Abgasstrom 145 g/h Propylen eingesetzt werden konnten und ca. 100 g/h an Rohaldehyd erhalten wurden. Das Verhältnis von linearen zu verzweigten Aldehyden blieb von dieser Produktivitätssteigerung unverändert.

3. <u>Regeneration einer wässrigen Lösung einer in der Propylenhydroformylierung gebrauchten Katalysatorlösung</u>

Ein gealterter Rh/TPPTS-Kontakt mit einem Gehalt an Phosphorsalzen von 37 Gew-%, wovon 11 Gew.-% auf TPPTS und 0,09 Gew.-% auf PDSPP entfielen, jeweils bezogen auf die wässrige Altkontaktlösung, wurde in der oben beschriebenen Apparatur für die kontinuierliche Hydroformylierung von Propylen eingesetzt. Die Reaktion wurde bei einer Temperatur von 135°C und einem Druck von 5 MPa durchgeführt. Der pH-Wert wurde durch Zugabe von Natronlauge auf einen Wert von 5,6 bis 5,7 eingestellt. Zudem wurde das molare Phosphor zu Rhodium-Verhältnis durch Ergänzung von TPPTS konstant gehalten. Bei diesen Bedingungen wurden 140 - 150 g/h Rohaldehyd erhalten.

Dem so eingefahrenen Reaktionssystem wurde PDSPP zugesetzt, so dass die Aldehydbildung auf 92 g/h zurückging.

Durch das dreimalige Einkoppeln von je ca. 5 g frischem modifiziertem Adsorbens innerhalb von 600 h gelang es, die ursprüngliche Produktionsrate von 150 g/h Rohaldehyd vergleichbarer Qualität und n- zu iso-Aldehydverhältnis wiederherzustellen.

4. <u>Verlängerung der Kontaktlaufzeit durch Verringerung der Zersetzung</u>

Ein gealterter Rh/TPPTS-Kontakt mit einem Gehalt an Phosphorsalzen von 32 Gew.-%, wovon 12 Gew.-% auf TPPTS und 0,08 Gew.-% auf PDSPP entfielen, jeweils bezogen auf die wässrige Katalysatorlösung, wurde in der oben beschriebenen Apparatur für die kontinuierliche Hydroformylierung von Propylen eingesetzt. Die Reaktion wurde bei einer Temperatur von 135°C und einem Druck von 5 MPa durchgeführt. Der pH-Wert wurde durch Zugabe von Natronlauge auf einen Wert von 6,0 eingestellt. Zudem wurde das molare Phosphor zu Rhodium-Verhältnis durch Ergänzung von TPPTS konstant gehalten. Bei diesen Reaktionsbedingungen wurden 140 - 150 g/h Rohaldehyd erhalten. Die Zersetzungsrate der Phosphor(III)-Komponenten betrug ca. 0,22 mmol/h.

In das so eingefahrene Reaktionssystem wurden etwa 5 g modifiziertes Adsorbens eingekoppelt und gleichzeitig die Reaktionstemperatur so abgesenkt, dass Abgasvolumenstrom und Produktivität konstant blieben. TPPTS-Konzentration und pH-Wert wurden ebenfalls konstant gehalten. Für weitere 3000 h Laufzeit konnte so bei 3 °C geringerer Reaktionstemperatur eine gleichbleibend hohe Produktivität aufrechterhalten werden, wobei nach einer Laufzeit von ca. 1400 h frisches modifiziertes Adsorbens eingekoppelt werden musste. Für den genannten Versuchszeitraum wurde eine Zersetzungsrate der Phosphor(III)-Komponenten von 0,17 mmol/h ermittelt.

## Patentansprüche

1. Verfahren zur Regenerierung gebrauchter Hydroformylierungskatalysatoren, **dadurch gekennzeichnet, dass** man

   a) ein Adsorbens, an dem Aminogruppen der Formel $-R^1-NH_2$, in der $R^1$ einen zweiwertigen Kohlenwasserstoffrest bedeutet, gebunden sind, mit der olefinisch ungesättigten Verbindung der allgemeinen Formel (I):

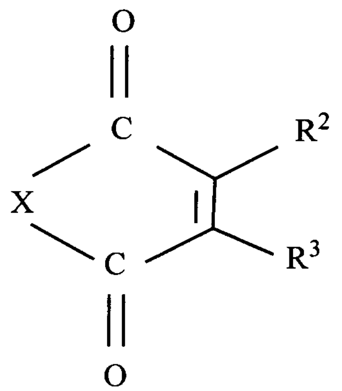

(1)

in der $R^2$ und $R^3$ jeweils unabhängig voneinander Wasserstoff oder einen Alkylrest mit 1 bis 4 Kohlenstoffatomen oder einen Arylrest mit 6 bis 14 Kohlenstoffatomen bedeuten, und in der X für O, S, N-$R^4$ steht, in der $R^4$ einen Alkylrest, einen Arylrest, einen Alkylarylrest oder Arylalkylrest bedeutet, reagieren lässt und dabei die gebildete Verbindung $H_2X$ entfernt;

b) eine Lösung des gebrauchten Hydroformylierungskatalysators mit dem gemäß Schritt a) erhaltenen Adsorbens in Kontakt bringt; und

c) die Lösung des gemäß Schritt b) in Kontakt gebrachten gebrauchten Hydroformylierungskatalysators von dem gemäß Schritt a) erhaltenen Adsorbens abtrennt;

mit der Maßgabe,
dass eine organische Lösung des gebrauchten Hydroformylierungskatalysators enthaltend Triphenylphosphin oder 2,2'-Bis(diphenyl-phosphinomethyl)-1,1'-binaphthyl mit dem Adsorbens in Kontakt gebracht wird, oder
dass eine wässrige Lösung des gebrauchten Hydroformylierungskatalysators enthaltend Arylphosphine der allgemeinen Formel (II):

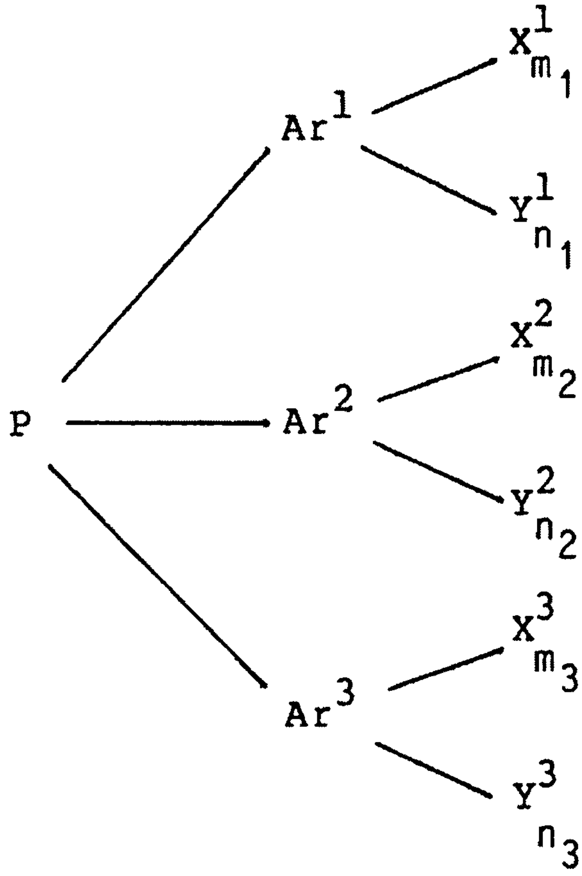

wobei $Ar^1$, $Ar^2$, $Ar^3$ jeweils eine Phenyl- oder Naphthylgruppe, $Y^1$, $Y^2$, $Y^3$ jeweils eine geradkettige oder verzweigte Alkylgruppe mit 1 bis 8 C-Atomen, eine geradkettige oder verzweigte Alkoxygruppe mit 1 bis 8 C-Atomen, ein Halogenatom, eine OH-, CN-, $NO_2$- oder $NR^5R^6$-Gruppe, in der $R^5$ und $R^6$ jeweils für eine geradkettige oder verzweigte Alkylgruppe mit 1 bis 8 C-Atomen stehen, bedeuten, $X^1$, $X^2$, $X^3$ für einen Carboxylat- (COO--) und/oder einen Sulfonat-($-SO_3^-$)-Rest stehen, $m_1$, $m_2$, $m_3$ gleiche oder verschiedene Zahlen von 0 bis 3 sind, wobei mindestens eine Zahl $m_1$, $m_2$, $m_3$ gleich oder größer als 1 ist, und $n_1$, $n_2$, $n_3$ gleiche oder verschiedene ganze Zahlen von 0 bis 5 sind, mit dem Adsorbens in Kontakt gebracht wird.

2. Verfahren gemäß Anspruch 1, **dadurch gekennzeichnet, dass** $R^1$ einen Alkylenrest mit 1 bis 5 Kohlenstoffatomen oder einen Arylenrest mit 6 bis 10 Kohlenstoffatom bedeutet.

3. Verfahren gemäß Anspruch 2, **dadurch gekennzeichnet, dass** $R^1$ für den Ethylen-, Propylen- oder Butylenrest steht, insbesondere für 1,3-Propylen oder 1,4-Butylen.

4. Verfahren gemäß einem oder mehreren der Ansprüche 1 bis 3, **dadurch gekennzeichnet, dass** man als olefinisch ungesättigte Verbindung der allgemeinen Formel (I) Maleinsäureanhydrid oder Maleimid verwendet.

5. Verfahren gemäß einem oder mehreren der Ansprüche 1 bis 4, **dadurch gekennzeichnet, dass** $R^4$ für einen Alkylrest mit 1 bis 5 Kohlenstoffatomen steht.

6. Verfahren gemäß einem oder mehreren der Ansprüche 1 bis 5, **dadurch gekennzeichnet, dass** das Adsorbens sich von Siliziumdioxid ableitet.

7. Verfahren gemäß einem oder mehreren der Ansprüche1 bis 6, **dadurch gekennzeichnet, dass** die Lösung des gebrauchten Hydroformylierungskatalysators bei einer Temperatur von 20 bis 145°C mit dem gemäß Schritt a) erhaltenen Adsorbens in Kontakt gebracht wird.

8. Verfahren gemäß einem oder mehreren der Ansprüche 1 bis 7, **dadurch gekennzeichnet, dass** die Lösung des gebrauchten Hydroformylierungskatalysators mit dem gemäß Schritt a) erhaltenen Adsorbens unter Anlegen eines Kohlenmonoxiddrucks in Kontakt gebracht wird.

## Claims

1. Process for regenerating used hydroformylation catalysts, **characterized in that**

a) an adsorbent to which amino groups of the formula $-R^1-NH_2$, where $R^1$ is a divalent hydrocarbon radical, are bound is allowed to react with the olefinically unsaturated compound of the general formula (I):

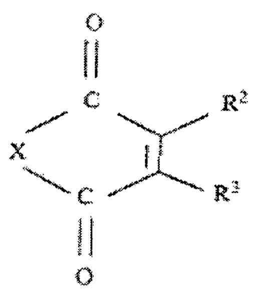

(I)

where $R^2$ and $R^3$ are each, independently of one another, hydrogen or an alkyl radical having from 1 to 4 carbon atoms or an aryl radical having from 6 to 14 carbon atoms and X is O, S, $N-R^4$, where $R^4$ is an alkyl radical, an aryl radical, an alkylaryl radical or arylalkyl radical, and the compound $H_2X$ formed is removed;
b) a solution of the used hydroformylation catalyst is brought into contact with the adsorbent obtained as per step a); and
c) the solution of the used hydroformylation catalyst which has been brought into contact as per step b) is separated from the adsorbent obtained as per step a);

with the proviso
that an organic solution of the used hydroformylation catalyst containing triphenylphosphine or 2,2'bis(diphenylphosphinomethyl)-1,1'-binaphthyl is brought into contact with the adsorbent or
that an aqueous solution of the used hydroformylation catalyst containing arylphosphines of the general formula (II):

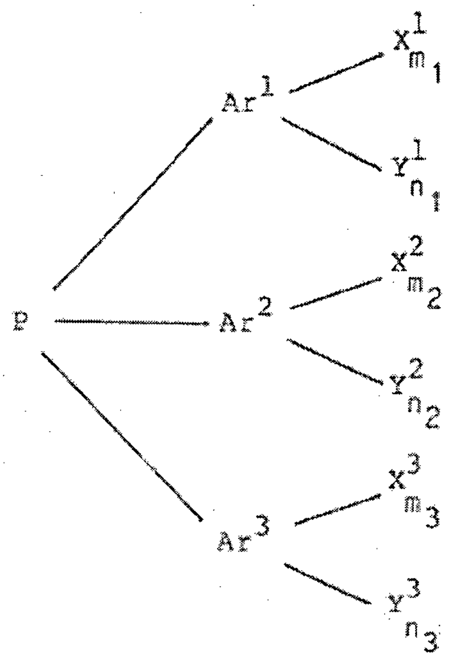

where $Ar^1$, $Ar^2$, $Ar^3$ are each a phenyl or naphthyl group, $Y^1$, $Y^2$, $Y^3$ are each a straight-chain or branched alkyl group having from 1 to 8 carbon atoms, a straight-chain or branched alkoxy group having from 1 to 8 carbon atoms, a halogen atom, an OH, CN, $NO_2$ or $NR^5N^6$ group in which $R^5$ and $R^6$ are each a straight-chain or branched alkyl group having from 1 to 8 carbon atoms, $X^1$, $X^2$, $X^3$ are each a carboxylate ($COO^-$) and/or sulfonate ($-SO_3^-$) radical, $m_1$, $m_2$, $m_3$ are identical or different numbers from 0 to 3, where at least one number $m_1$, $m_2$, $m_3$ is equal to or greater than 1, and $n_1$, $n_2$, $n_3$ are identical or different integers from 0 to 5, is brought into contact with the adsorbent.

2. Process according to Claim 1, **characterized in that** $R^1$ is an alkylene radical having from 1 to 5 carbon atoms or an arylene radical having from 6 to 10 carbon atoms.

3. Process according to Claim 2, **characterized in that** $R^1$ is the ethylene, propylene or butylene radical, in particular 1,3-propylene or 1,4-butylene.

4. Process according to one or more of Claims 1 to 3, **characterized in that** maleic anhydride or maleimide is used as olefinically unsaturated compound of the general formula (I).

5. Process according to one or more of Claims 1 to 4, **characterized in that** $R^4$ is an alkyl radical having from 1 to 5 carbon atoms.

6. Process according to one or more of Claims 1 to 5, **characterized in that** the adsorbent is derived from silicon dioxide.

7. Process according to one or more of Claims 1 to 6, **characterized in that** the solution of the used hydroformylation catalyst is brought into contact with the adsorbent obtained as per step a) at a temperature of from 20 to 145°C.

8. Process according to one or more of Claims 1 to 7, **characterized in that** the solution of the used hydroformylation catalyst is brought into contact with the adsorbent obtained as per step a) with application of a carbon monoxide pressure.

## Revendications

1. Procédé pour la régénération de catalyseurs d'hydroformylation usagés, **caractérisé en ce que**

a) on fait réagir un adsorbant auquel sont liés des groupes amino de formule $-R^1-NH_2$, dans laquelle $R^1$ signifie un radical hydrocarboné bivalent, avec le composé oléfiniquement insaturé de formule générale (I) :

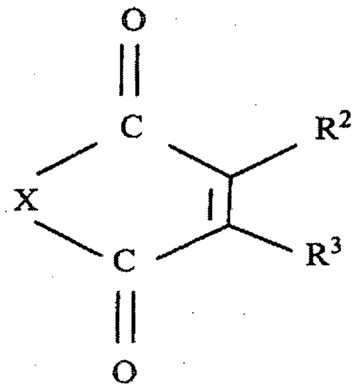

(1)

dans laquelle $R^2$ et $R^3$ signifient, à chaque fois indépendamment l'un de l'autre, hydrogène ou un radical alkyle comprenant 1 à 4 atomes de carbone ou un radical aryle comprenant 6 à 14 atomes de carbone et dans laquelle X représente O, S, $N-R^4$, où $R^4$ représente un radical alkyle, un radical aryle un radical alkylaryle ou un radical arylalkyle, et on élimine le composé $H_2X$ formé ;
b) on met en contact une solution du catalyseur d'hydroformylation usagé avec l'adsorbant obtenu dans l'étape a) ; et
c) on sépare la solution du catalyseur d'hydroformylation usagé mis en contact selon l'étape b) de l'adsorbant obtenu dans l'étape a) ;

étant entendu que
une solution organique du catalyseur d'hydroformylation usagé contenant de la triphénylphosphine ou du 2,2-bis(diphénylphosphinométhyl)-1,1'-binaphtyle est mise en contact avec l'adsorbant ou
une solution aqueuse du catalyseur d'hydroformylation usagé, contenant des arylphosphines de formule générale (II) :

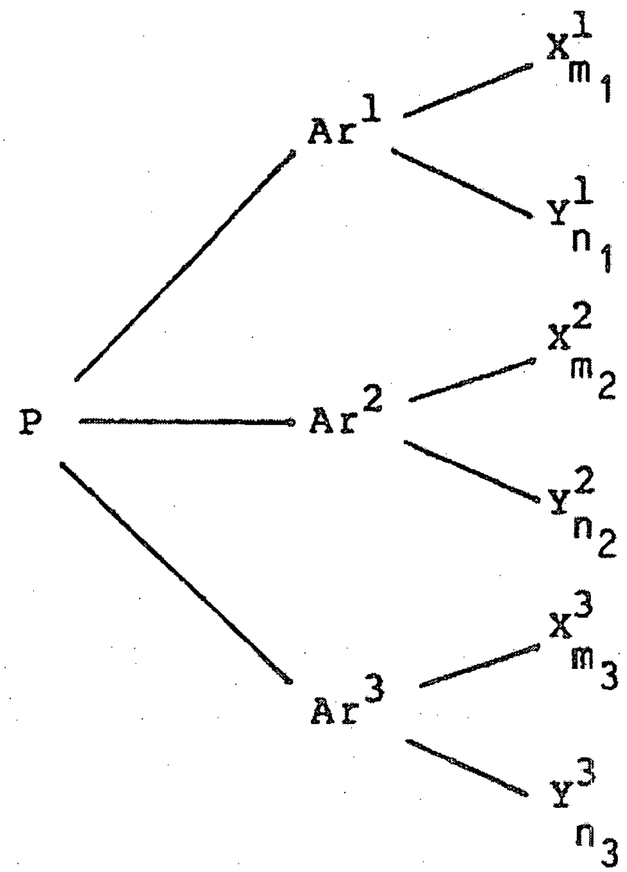

dans laquelle $Ar^1$, $Ar^2$, $Ar^3$ signifient à chaque fois un groupe phényle ou naphtyle, $Y^1$, $Y^2$, $Y^3$ signifient à chaque fois un groupe alkyle linéaire ou ramifié comprenant 1 à 8 atomes de carbone, un groupe alcoxy linéaire ou ramifié comprenant 1 à 8 atomes de carbone, un atome d'halogène, un groupe OH, CN, $NO_2$ ou $NR^5R^6$, où $R^5$ et $R^6$ représentent à chaque fois un groupe alkyle linéaire ou ramifié comprenant 1 à 8 atomes de carbone, $X^1$, $X^2$, $X^3$ représentent un radical carboxylate ($COO^-$) et/ou un radical sulfonate ($-SO_3^-$), $m_1$, $m_2$, $m_3$ représentent des nombres identiques ou différents de 0 à 3, au moins un nombre $m_1$, $m_2$, $m_3$ étant égal ou supérieur à 1, et $n_1$, $n_2$, $n_3$ sont des nombres entiers identiques ou différents de 0 à 5, est mise en contact avec l'adsorbant.

2. Procédé selon la revendication 1, **caractérisé en ce que** $R^1$ signifie un radical alkylène comprenant 1 à 5 atomes de carbone ou un radical arylène comprenant 6 à 10 atomes de carbone.

3. Procédé selon la revendication 2, **caractérisé en ce que** $R^1$ représente le radical éthylène, propylène ou butylène, en particulier 1,3-propylène ou 1,4-butylène.

4. Procédé selon l'une ou plusieurs des revendications 1 à 3, **caractérisé en ce qu'**on utilise, comme composé oléfiniquement insaturé de formule générale (I), de l'anhydride de l'acide maléique ou du maléimide.

5. Procédé selon l'une ou plusieurs des revendications 1 à 4, **caractérisé en ce que** $R^4$ représente un radical alkyle comprenant 1 à 5 atomes de carbone.

6. Procédé selon l'une ou plusieurs des revendications 1 à 5, **caractérisé en ce que** l'adsorbant est dérivé du dioxyde de silicium.

7. Procédé selon l'une ou plusieurs des revendications 1 à 6, **caractérisé en ce que** la solution du catalyseur d'hydroformylation usagé est mise en contact avec l'adsorbant obtenu dans l'étape a) à une température de 20 à 145°C.

8. Procédé selon l'une ou plusieurs des revendications 1 à 7, **caractérisé en ce que** la solution du catalyseur d'hydroformylation usagé est mise en contact avec l'adsorbant obtenu dans l'étape a) en appliquant une pression en monoxyde de carbone.

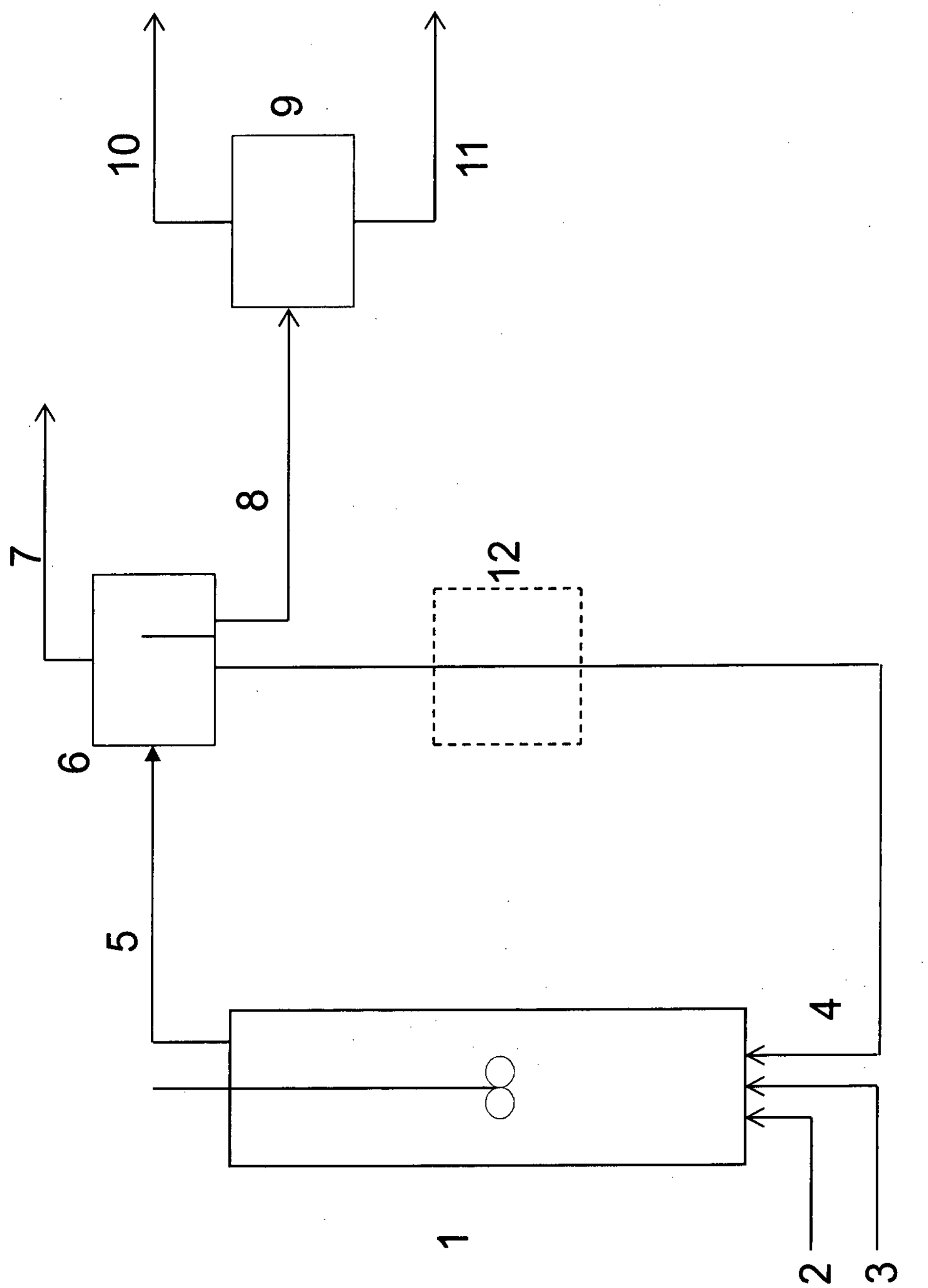


Figur 1:

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102005046250 A1
- DE 2627354 A1
- DE 3135127 A1
- EP 0571819 A1
- US 4283304 A
- EP 0544091 A1
- EP 0544091 A


### In der Beschreibung aufgeführte Nicht-Patentliteratur


- **ENGEL, T.** *Chem. Mater.,* 2013, vol. 25, 149-157